# EUROPEAN PATENT APPLICATION

(11) **EP 3 070 469 A1**
(43) Date of publication of application: **21.09.2016**
(21) Application number: 15159628.5
(22) Date of filing: 18.03.2015
(51) Int. Cl.: G01N 30/30, B01D 15/16

(54) **Solvent heating system for preparative separations**

(71) Applicant: Université de Genève, 1211 Genève (CH)
(72) Inventor: Klöti, Werner, 1296 COPPET (CH); Ferreira Queiroz, Emerson, 1028 Préverenges (CH); Challal, Souara, 1010 Lausanne (CH); Wolfender, Jean-Luc, 1296 COPPET (CH)
(74) Representative: KATZAROV S.A.

(57) **Abstract**

The present invention is directed to medium pressure liquid chromatography (MPLC) equipment components and other chromatographic separation techniques where high flow rates, of at least 5mL/min, are used. In particular, the subject matter disclosed herein relates to optimization of such techniques by heating the mobile phase solvent prior to sample injection and controlling parameters.

## Description

### Field of the Invention

The invention relates to the field of chromatographic separation or purification. More specifically, the present invention is directed to Medium Pressure Liquid Chromatography (MPLC) equipment components and other chromatographic separation techniques where high flow rates are used. In particular, the subject matter disclosed herein relates to optimization of such techniques by heating the mobile phase solvent and controlling parameters.

### BACKGROUND OF THE INVENTION

Chromatography is a set of techniques for separating a mixture into its constituents. Generally, in a liquid chromatography analysis, a pump system takes in and delivers a mixture of liquid solvents (and/or other fluids) to a sample manager, where a sample awaits injection into the solvents. The sample is the material under analysis. Examples of samples include complex mixtures of proteins, protein precursors, protein fragments, extracts containing natural products, reaction products, and other compounds, to list but a few. In an isocratic chromatography application, the composition of the liquid solvents remains unchanged, whereas in a gradient chromatography application, the solvent composition varies over time. The mobile phase, comprised of a sample dissolved in a mixture of solvents (and/or other fluids), moves to a point of use, such as a column, referred to as the stationary phase.

By passing the mobile phase through the column, the various components in the sample separate from each other at different rates and thus elute from the column at different times. A detector receives the separated components from the column and produces an output from which the identity and quantity of the analytes may be determined. Temperature can influence the results of the analysis, affecting such properties as the separation performance of the column and the viscosity of a mobile phase. Therefore, maintaining an accurate constant column temperature is important to the accuracy and reproducibility of the results, furthermore working at high temperature decrease viscosity and thus higher flow rates can be used which increases the speed of separation

In high performance liquid chromatography (HPLC) at the analytical scale, it is possible to heat the eluent by passing it through a specific heating system (eg: aluminium block heated by a resistor). The tubes are moulded in the aluminium block and the mobile phase is heated by heat transfer. This system has a large thermal inertia that does not allow a rapid control of the temperature. Such a setup is suitable for analytical HPLC separations that are typically preformed between 0.1 to 2 ml / min depending on the type of column but it does not allow the use of higher flow rates. Analytical HPLC columns are also heated using a thermostatically controlled oven.

WO 2013/133934 (Waters technologies Corporation) discloses an apparatus for heating a flowing fluid includes a tubing assembly, a heater block made of thermally conductive material, and a heater cartridge in thermal communication with the heater block. The heater cartridge is configured to provide heat to the heater block for transfer to fluid flowing through the tubing assembly. The apparatus also includes circuitry in electrical communication with the heater cartridge to control a temperature of the heater block by controlling operation of the heater cartridge. The heater block is die-cast about the tubing assembly. Such a setup is suitable for analytical HPLC separations that are typically performed between 0.1 to 2 ml / min depending on the type of column but it does not allow the use of higher flow rates.

This solution is adapted and effective at analytical scale because of the low heat transfer system. However at semi or preparative scales where flow rates exceeding 5 ml / min are used, the heat transfer is insufficient to homogeneously raise the temperature of the mobile phase.

Medium pressure liquid chromatography (MPLC) is used as a separation method for the purification of organic compounds at the preparative scale. To date MPLC separations are not operated under controlled temperature. This lack of temperature control does not allow a precise geometrical gradient transfer from analytical HPLC and do not give the possibility to increase the flow rate by decreasing the flow rate viscosity. Increasing the temperature separation at the preparative scale can significantly increase the throughput of the purification methods and represent a significant improvement of this technology. Compared to analytical HPLC, MPLC separations are performed at much higher flow rates and, for this reason, the system described in the paragraph above is not suitable.

### BRIEF DESCRIPTION OF THE INVENTION

In liquid chromatography, heating the eluent which constitutes the mobile phase has a great significance to solve the working pressure and thereby increasing the flow rate and thus the speed of the separations. Heating is also important to adjust the selectivity and improve the reproducibility of the separation conditions.

The mobile phase heating device of the invention is an electromechanical assembly used to condition mobile phase solvent to a specified temperature before it enters a chromatography column. Heat transfer takes place between a thermally conductive thermostat controller containing at least one heater and a solvent tubing assembly which the mobile phase solvent travels through.

One aspect provides an apparatus for heating a flowing fluid. The apparatus includes a solvent tubing assembly, a thermostat controller made of thermally conductive material, and at least one heater in thermal communication with the thermostat controller. The heater is configured to provide heat to the thermostat controller for transfer to fluid flowing through the solvent tubing assembly. The mobile phase heating device also includes circuitry in electrical communication with the heater to control a temperature of the thermostat controller by controlling operation of the at least one heater.

It is one object of the present invention to provide a preparative medium pressure liquid chromatography (MPLC) adapted for a flow rate of at least 5 ml/min comprising:
- a chromatography column
- a binary pump system
- a solvent tubing assembly,
wherein the MPLC comprises a mobile phase heating device mounted on said solvent tubing assembly upstream the injection system and the column of said MPLC and whereas said mobile phase heating device comprises
- a thermostat controller adapted on said solvent tubing assembly of said MPLC,
- at least one heater having a low thermal inertia and a safety device capable of monitoring the temperature.

The present invention also encompasses other chromatographic separation techniques where high flow rates are used.

According to yet another embodiment, the apparatus comprises a computer program product comprising computer-executable instructions embodied in a computer-readable medium for controlling the heating control device.

Other objects and advantages of the invention will become apparent to those skilled in the art from a review of the ensuing detailed description, which proceeds with reference to the following illustrative drawings, and the attendant claims.

### BRIEF DESCRIPTION OF THE FIGURES

Figure 1: shows a MPLC setup with a mobile phase heater and pressure control. A) Electronic Pressure gauge 3100 series heavy duty compact OEM pressure transmitters. 4 to 20 mA output. Pressure range: 0 to 40 bars
Figure 2: illustrates the solvent heater details. A) Coil internal diameter: 25 mm, Number of turns 15. Active length: 1400 mm, Cold resistance: 0.82 Ω (20°C). Hot resistance: 1.025 Ω (70°C). Temperature coefficient of 304 stell 0.0052 Ω. Explanation: By increasing the voltage of the power supply, the current will flow thought the tubing. This produces an increase in temperature (Joule's effect). In the present case, Applicants use an AC voltage delivered by a transformer (primary voltage 230 V, secondary voltage 9V and 11.12A). Total power available 100 VA.

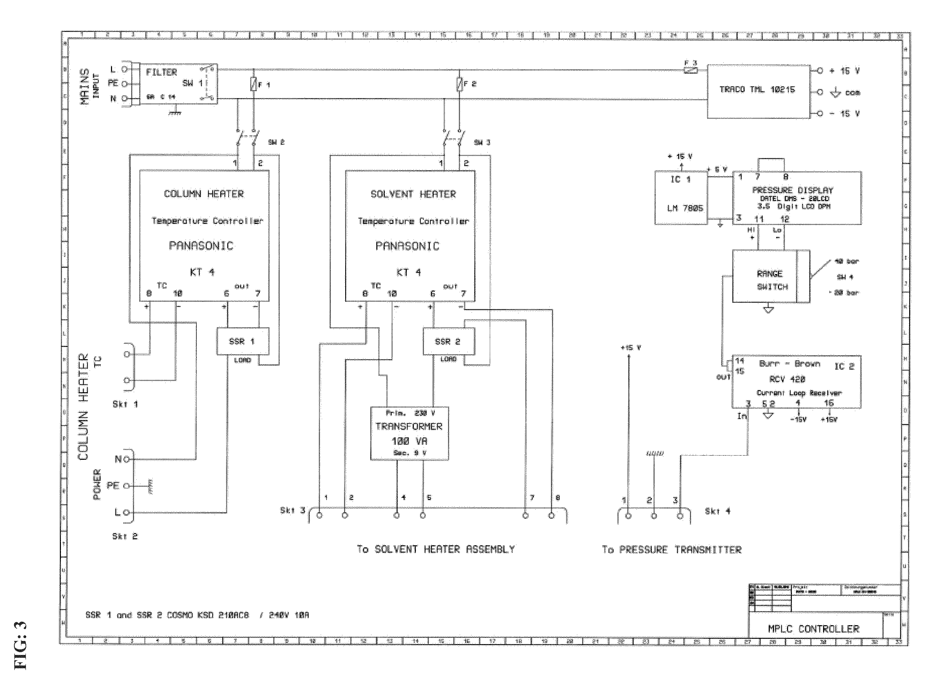

Figure 3: describes the electronic module for the temperature control and pressure measurement.
Figure 4: shows the column heater details.
Figure 5: presents an analytical HPLC analysis of the dichloromethane extract of *Anacardium occidentale* increasing temperature (25°C to 60°C). Conditions: Column Zeoprep C18 (15-25 µm, 250 x 4. 6 mm, i.d.). Solvent system: MeOH (A) and H₂O (B) in gradient mode 5% of A to 100% of A in 60 min. Inj. 10 µg. UV at 280 nm.
Figure 6: shows the preparative MPLC analysis of the dichloromethane extract of *Anacardium occidentale* at temperature of 25°C (case 1) and 45°C (case 2). Conditions: Column Zeoprep C18 (15-25 µm, 920 x 49mm, i.d.). Solvent system: MeOH (A) and H₂O (B) in gradient mode 5% of A to 100% of A in 22hs (case 1) and 7hs (case 2). Inj. 3.5 g. UV at 280 nm.

### DETAILED DESCRIPTION OF THE INVENTION

Although methods and materials similar or equivalent to those described herein can be used in the practice or testing of the present invention, suitable methods and materials are described below. The publications and applications discussed herein are provided solely for their disclosure prior to the filing date of the present application. Nothing herein is to be construed as an admission that the present invention is not entitled to antedate such publication by virtue of prior invention. In addition, the materials, methods, and examples are illustrative only and are not intended to be limiting.

In the case of conflict, the present specification, including definitions, will control.
Unless defined otherwise, all technical and scientific terms used herein have the same meaning as is commonly understood by one of skill in art to which the subject matter herein belongs. As used herein, the following definitions are supplied in order to facilitate the understanding of the present invention.

The term "comprise" is generally used in the sense of include, that is to say permitting the presence of one or more features or components.

As used in the specification and claims, the singular forms "a", "an" and "the" include plural references unless the context clearly dictates otherwise.

A typical standard MPLC setup is characterized by a binary pump system, controlled by an optional gradient former, connected to a large chromatography column. The sample is introduced by an injection loop or a solid introduction cartridge (dry load cell). The exit of the MPLC column is connected to a detector (UV or ELSD) and a fraction collector for the collection of the compounds that have to be purified.

In order to control the temperature in such a setup a fast heating system according to the invention has to be installed prior to the injection system and the column.

It is an object of the present invention to provide a preparative medium pressure liquid chromatography (MPLC) adapted for a flow rate of at least 5 ml/min comprising:
- a chromatography column
- a binary pump system
- a solvent tubing assembly
   wherein the MPLC comprises a mobile phase heating device mounted on said solvent tubing assembly upstream the injection system and the column of said MPLC and whereas said mobile phase heating device comprises
- a thermostat controller adapted on said solvent tubing assembly of said MPLC,
- at least one heater having a low thermal inertia and a safety device capable of monitoring the temperature.

Advantageously, the temperature of the column is controlled by a thermostat controller and preferably an electronic thermostat. In one embodiment of the invention, the thermostat controller further comprises a computer program product comprising computer-executable instructions embodied in a computer-readable medium for controlling said mobile phase heating device.
With the mobile phase heating device of the present invention, the temperature may be stabilized to 1/10 °C. In certain implementations, the mobile phase is heated at high flow rates between 5 to 100 ml/min.

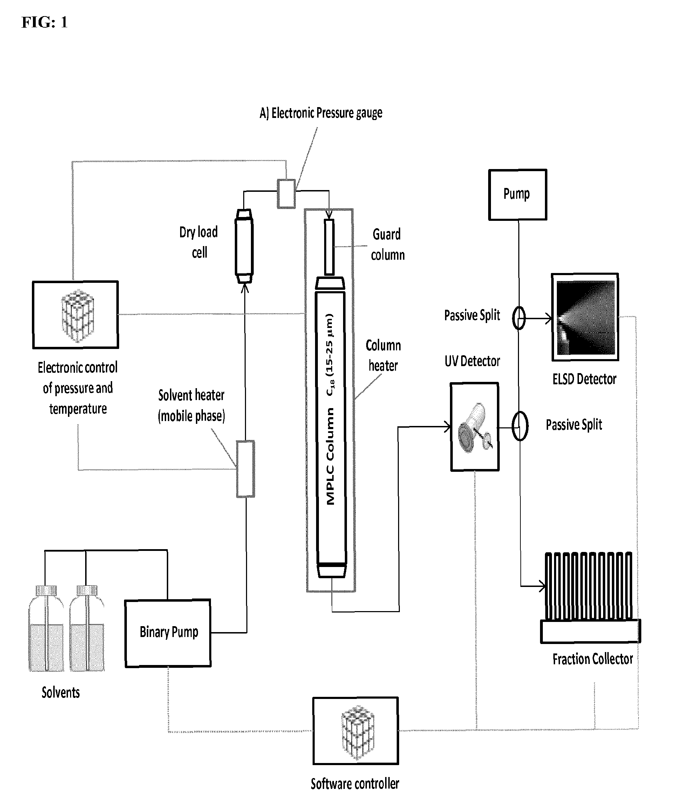

In certain implementations, the chromatography column is heated by a thermostatically oven or by a heating tape.
For example, in one embodiment of the invention, the column is heated by a heating tape wrapped around the chromatographic column (Figure 1). Preferably, the heating tape is flexible and in an even preferred embodiment of the invention said flexible heating tape is made of silicone (such as the commercial device manufactured by Pilz AG, Germany).

Advantageously, the thermostat controller of the present invention is equipped with a safety device (such as thermostat AIPAX TO220, Type: 67L070, set. Temperature 70°C ± 5°C). If the temperature exceeds the limit of 70°C the system will shut down (set to the boiling point of the solvents used).

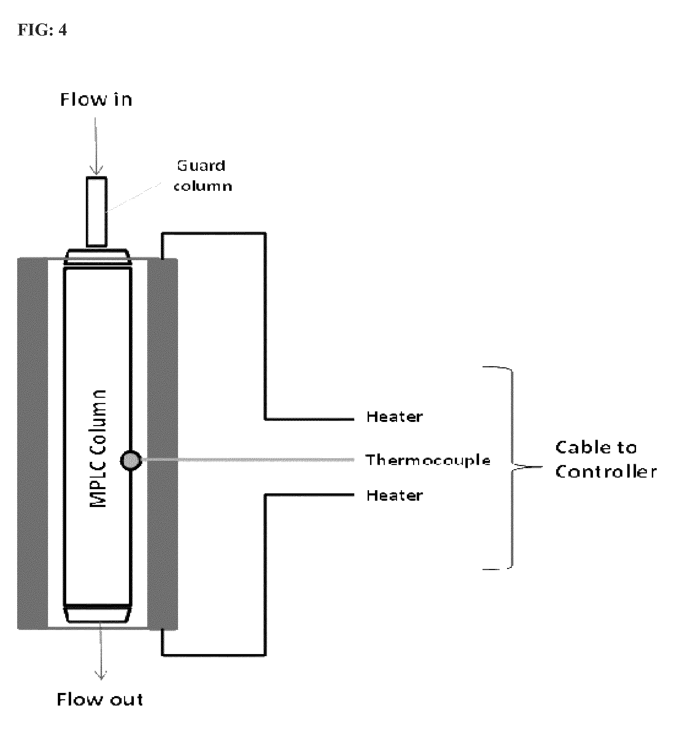

The system is extremely compact for heating the mobile phase at high flow rates (5-100 ml / min). For example, the dimensions of the device may be of about 140 mm in length with a diameter of 45 mm. As described above, MPLC preparative column can also be heated using a thermostatically controlled oven or by a heating tape (Figure 4). In the case of an oven, the column is placed inside a heated box. By using a flexible heating tape, the tape is just wrapped around the column.

According to another embodiment of the invention, the preparative medium pressure liquid chromatography (MPLC) further comprises a pressure detector placed between the sample introduction cell and said chromatography column so as to monitor the pressure at the inlet of the column.
Preferably the pressure detector is an electronic pressure gauge.
In a preferred embodiment, the pressure detector is controlled by a computer.

In particular, a pressure detector (preferably an electronic pressure gauge) is placed between the sample introduction cell and the MPLC column so as to monitor the pressure at the inlet of the column. Said pressure detector is used to monitor the pressure at the inlet of the column which cannot withstand pressure higher than 50 bars. The column pressure might indeed differ from that measured by the pumps at the entrance of the dry load cell. Ideally a pressure sensor is included in the pump.

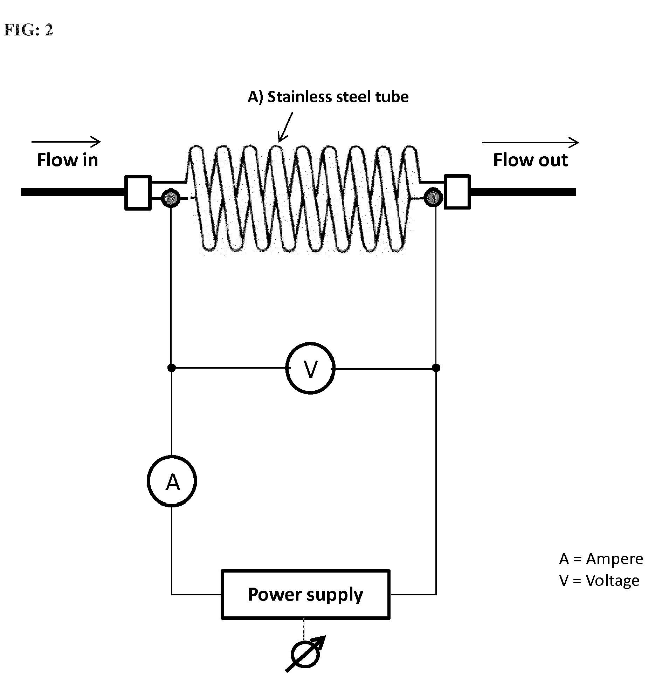

In some implementations, the solvent tubing assembly is a stainless steel tube.
In certain implementations, the solvent tubing assembly includes tubing, a tube sleeve welded around the tubing, and a restraining component welded around the tubing.
In some other implementations, the solvent tubing assembly includes tubing in the form of a serpentine loop (Figure 2).

The system of the invention has a very low thermal inertia for rapid temperature control. The thermal contact with the mobile phase is direct because the stainless steel tube is directly heated by the joule effect.

Indeed, WO 2013/133934 uses a heating element placed above the capillary tube. Thus to heat the liquid that goes within the capillary tube, one must heat the entire system. In the present invention, the heating is directly performed by Joule effect on the capillary tube (electric current by heating a few amperes).

Those skilled in the art will appreciate that the invention described herein is susceptible to variations and modifications other than those specifically described. It is to be understood that the invention includes all such variations and modifications without departing from the spirit or essential characteristics thereof. The invention also includes all of the steps, features, compositions and compounds referred to or indicated in this specification, individually or collectively, and any and all combinations or any two or more of said steps or features. The present disclosure is therefore to be considered as in all aspects illustrated and not restrictive, the scope of the invention being indicated by the appended Claims, and all changes which come within the meaning and range of equivalency are intended to be embraced therein.

The foregoing description will be more fully understood with reference to the following Examples. Such Examples, are, however, exemplary of methods of practising the present invention and are not intended to limit the scope of the invention.

### Examples

### Example 1:

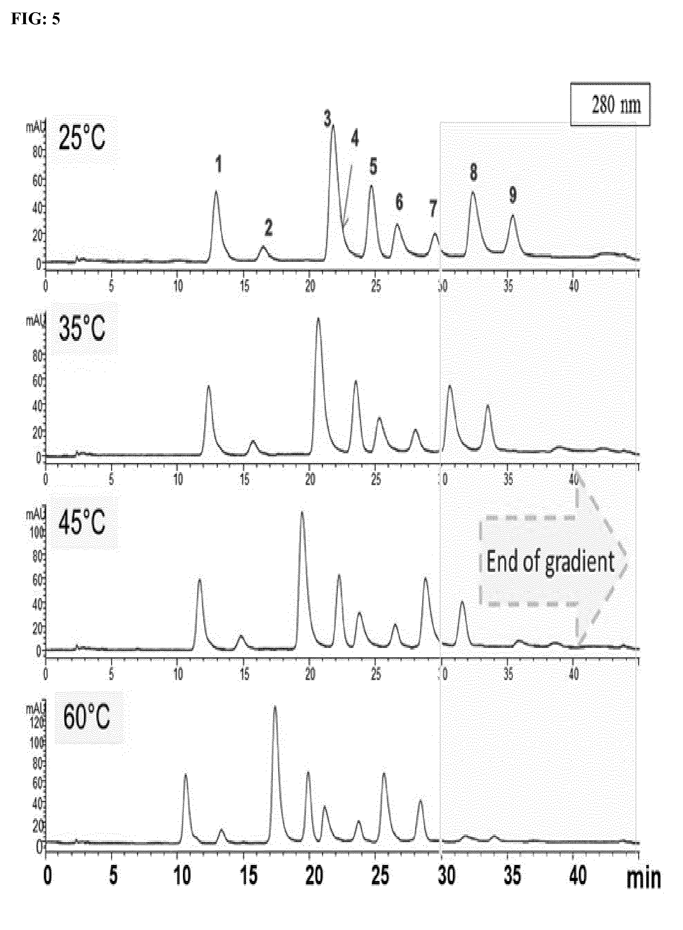

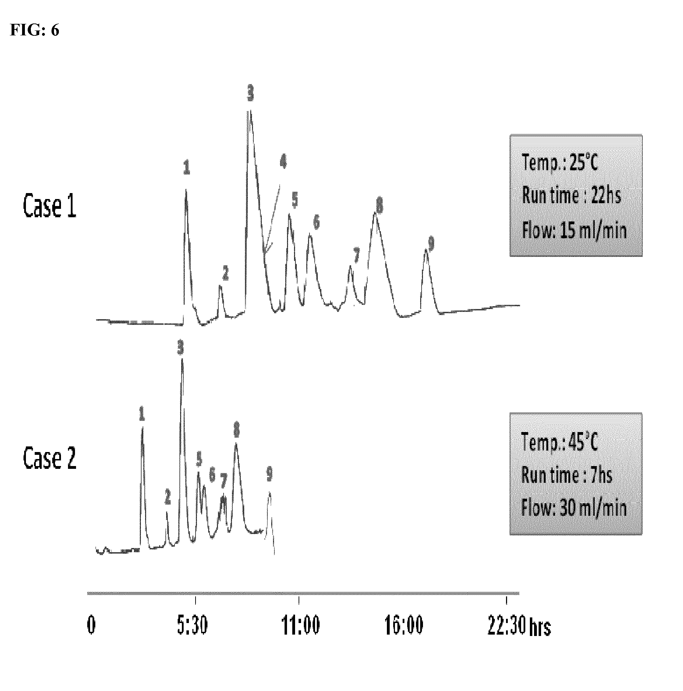

An example of the advantages in term of throughput that can be obtained by performing an MPLC at high temperature is provided by the isolation of the constituents of the crude extract from the nut shell *of Anacardium occidentale.*
The HPLC-UV profiling of the dichloromethane extract revealed the presence of various compounds of interest that needed to be obtained at large scale (tens of mg of purified compounds) for *in vivo* bioassay. The HPLC separation was performed at high temperature in order to reduce the separation time in MPLC compare to room temperature. The gradient transfer from the analytical HPLC to preparative MPLC was performed by using the same reversed phase material (Figure 5). Since MPLC separations are limited by the pressure allowed on the glass column (< 20 Bars) and typical separation of complex crude extracts are usually carried out over several days, the effect of the temperature to increase the flow rate and thus decrease the separation time was investigated at the MPLC scale. For this, a thermostated MPLC system equipped with the new eluent heating device describe in this patent application was used (Figure 1). An efficient temperature and pressure control was thus obtained. The increase of temperature up to 45°C demonstrated that the total separation time could be reduced of more than 3-fold. For this specific application all compounds of interested were isolated in one step in only 7 hours at 30 ml/min while the same separation at room temperature took 22 hours at 15 ml/min (Figure 6). This temperature optimization represents thus a huge gain in separation time since it enables to use higher eluent flow rates while maintaining similar maximum pressure operations. This would have not been possible without using the heating device according to the present invention.

## Claims

1. A preparative medium pressure liquid chromatography (MPLC) adapted for a flow rate of at least 5 ml/min comprising :
- a chromatography column,
- a binary pump system,
- a solvent tubing assembly,
**characterized in that** the MPLC comprises a mobile phase heating device mounted on said solvent tubing assembly upstream the injection system and the column of said MPLC and wherein said mobile phase heating device comprises
- a thermostat controller adapted on said solvent tubing assembly of said MPLC,
- at least one heater having a low thermal inertia and a safety device capable of monitoring the temperature.

2. The preparative medium pressure liquid chromatography (MPLC) of claim 1, wherein the thermostat controller further comprises a computer program product comprising computer-executable instructions embodied in a computer-readable medium for controlling said mobile phase heating device.

3. The preparative medium pressure liquid chromatography (MPLC) according to any one of claims 1-2, wherein said chromatography column is heated by a thermostatically oven or by a heating tape.

4. The preparative medium pressure liquid chromatography (MPLC) according to any one of claims 1-3, wherein the temperature can be stabilized to 1/10 °C.

5. The preparative medium pressure liquid chromatography (MPLC) according to any one of claims 1-4, wherein the mobile phase is heated at high flow rates between 5 to 100 ml/min.

6. The preparative medium pressure liquid chromatography (MPLC) according to any one of claims 1-5, further comprising a pressure detector placed between the sample introduction cell and said chromatography column so as to monitor the pressure at the inlet of the column.

7. The preparative medium pressure liquid chromatography (MPLC) of claim 6, wherein the pressure detector is an electronic pressure gauge.

8. The preparative medium pressure liquid chromatography (MPLC) of any one of claims 6 to 7, wherein the pressure detector is controlled by a computer.

9. The preparative medium pressure liquid chromatography (MPLC) of any one of claims 1 to 8, wherein the solvent tubing assembly is a stainless steel tube.

10. The preparative medium pressure liquid chromatography (MPLC) of any one of claims 1 to 9, wherein the solvent tubing assembly includes tubing in the form of a serpentine loop.
